# EUROPEAN PATENT SPECIFICATION

(11) **EP 1 735 659 B1**
(45) Date of publication and mention of the grant of the patent: **18.08.2010**
(21) Application number: 05706330.7
(22) Date of filing: 02.03.2005
(51) Int. Cl.: G02F 1/365

(54) **A PHOTON SOURCE**
PHOTONENQUELLE
SOURCE PHOTONIQUE

(30) Priority: 02.03.2004 AU 2004901069; 03.06.2004 AU 2004902978
(43) Date of publication of application: 27.12.2006
(73) Proprietor: The University of Melbourne, Parkville, VIC 3010 (AU)
(72) Inventor: HUNTINGTON, Shane, T., SYDENHAM, Victoria 3037 (AU); PRAWER, Steven, CAULFIELD, Victoria 3162 (AU); GREENTREE, Andrew, D., COBURG, Victoria 3058 (AU); RABEAU, James, WATTLE GLEN, Victoria 3096 (AU)
(74) Representative: Manitz, Finsterwald & Partner GbR
(86) International application number: PCT/AU2005/000296
(87) International publication number: WO 2005/085946

(56) References cited:
- WO-A1-2004/046427
- US-A- 5 839 830
- US-A1- 2003 021 518
- MAY P W ET AL: "CVD diamond-coated fibres" DIAMOND AND RELATED MATERIALS, ELSEVIER SCIENCE PUBLISHERS, AMSTERDAM, NL, vol. 4, no. 5-6, 1 May 1995 (1995-05-01), pages 794-797, XP004066832 ISSN: 0925-9635
- BEVERATOS A ET AL: "Room temperature stable single-photon source" European Physical Journal D EDP Sciences; Springer-Verlag France, vol. 18, no. 2, 2002, pages 191-196, XP002468470 ISSN: 1434-6060
- BEVERATOS A ET AL: "Nonclassical radiation from diamond nanocrystals" PHYSICAL REVIEW. A, AMERICAN PHYSICAL SOCIETY; AMERICAN INSTITUTE OF PHYSICS, NEW, US, vol. 64, no. 6, December 2001 (2001-12), pages 61802-1, XP002456037 ISSN: 1050-2947
- KÜHN S ET AL: "Diamond colour centres as a nanoscopic light source for scanning near-field optical microscopy" 6TH INTERNATIONAL CONFERENCE ON NEAR-FIELD OPTICS AND RELATED TECHNIQUES 27-31 AUG. 2000 ENSCHEDE, NETHERLANDS, vol. 202, 2001, pages 2-6, XP002468471 Journal of Microscopy Blackwell Science UK ISSN: 0022-2720
- BUTLER J. ET AL: 'Chemical Vapor Deposited Diamond-Maturity and Diversity.' THE ELECTRICAL SOCIETY INTERFACE., [Online] 2003, pages 22 - 26, XP008092665 Retrieved from the Internet: <URL:http://ftp.electrochem.org/publication s/interface/spring200/IF3-03-Pages22-26.pdf > [retrieved on 2005-04-08]
- PATENT ABSTRACTS OF JAPAN & JP 09 028 715 A (SUMITOMO ELECTRIC INDUSTRIES LTD) 04 February 1997

## Description

### Field of the Invention

The present invention broadly relates to a photon source and relates particularly, though not exclusively, to a photon source suitable for quantum key distribution.

### Background of the Invention

For many applications, such as a quantum key distribution, photon sources are required that provide single photons or entangled multiple photons. Colour centres in diamond, for example, could be used for single photon emission. Such colour centres typically comprise at least one optically active impurity atom, such as a nitrogen atom, which is positioned adjacent to a vacancy in the diamond matrix. Such nitrogen-vacancy (N-V) centres are excited using an optical or electronic excitation source and are typically arranged to emit single photons having a wavelength in the vicinity of 637nm. However, the single photons are emitted isotropically, which makes the collection and guiding of the emitted photons very difficult. Usually an objective lens, accurately aligned to a single colour centre, is used to collect the emitted photons, but optical losses at optical interfaces can be significant and this collection technique is generally cumbersome and not very robust. Further, optical lenses are difficult to combine with integrated technology and also make cooling or heating of the device more difficult.

For the implementation of quantum key distribution and other applications that require single photons technological advancement in the generation of the single photons is required.

### Summary of the Invention

The present invention provides in a first aspect a photon source as defined in claim 1.

The present invention provides in a second aspect a photon source as defined in claim 2.

Because the material is bonded to the waveguide and/or the material is incorporated in the optical waveguide, the or each colour centre is coupled to the waveguide. Consequently the photon source according to embodiments of the first and second aspect of the present invention has the advantage that not necessarily furthers optical components are required to direct the emitted single photons to the waveguide.

The photon source may be relatively robust and small, may be integrated and typically is relatively easy to cool or heat. In addition, a close association of the or each colour centre with the waveguide is beneficial for the efficiency of the photon source as colour centres are often isotropic photon emitters. The coupling of the or each colour centre with the waveguide may also result in improved stability and durability of the photon source.

Throughout this specification, the term "colour centre" is used for any optically active atomic, molecular or vacancy centre from which photons may be emitted including atomic, molecular or vacancy centres which are arranged for a decay of an excited stated via emission of a single photon or multiple photons. For example, the colour centre may be arranged for emission of single photons or multiple photons having wavelengths inside and/or outside the visible range.

In one embodiment of the first and second aspects of the present invention the or each colour centre is arranged for the emission of single photons.

The term "emission of single photons" is used for the emission of only one photon at a time. For example, if the or each colour centre is arranged for the emission of single photons, the or each colour centre may emit in use a sequence or pulse of single (individual) photons.

In specific embodiments of the first and second aspects of the present invention the photon source is a source of single photons and therefore is a photon source that does not simultaneously emit two or more photons. For example, the photon source may comprise one colour centre for emission of single photons. The photon source may comprise more than one colour centres, but in this case the photon source typically is arranged so that at a given time only one colour centre is excited and emits a photon.

In other specific embodiments of the first and second aspects of the present invention the photon source is arranged for emission of entangled photons. In this case the photon source typically comprises at least two colour centres which are arranged to emit together at least two entangled photons. The photon source typically comprises at least one pair of colour centres which is arranged for the emission of a pair of entangled photons. In a variation of this embodiment the photon source may comprise one or more colour centres and each colour centre is itself arranged for the emission of entangled photons.

In the first and second aspects of the present invention the material typically has a diamond structure. and typically is a diamond material such as a synthetic diamond single or polycrystalline material.

In the first and the second aspect of the present invention the waveguide typically has a core region and the material typically is grown on a portion of the core region of the waveguide.

In the photon source according to the first or the second aspects of the present invention the material may be indirectly bonded to the waveguide. For example, a layer of another material may be positioned between the material and the optical waveguide. However, the material typically is directly bonded to the waveguide.

In the photon source according to the second aspect of the present invention the material may be embedded in the optical waveguide. The material may also be a part of the waveguide. For example, the material may comprise a core portion or the entire core may be composed of the material. In one specific embodiment the waveguide comprises a core that is composed of the material, such as diamond, and the or each colour centre is formed in the core of the waveguide. For example, the diamond core may be formed first and the or each colour centre may be generated in the diamond core (eg by implantation).

At least a portion of the length of the waveguide may be composed of diamond and in one specific embodiment the entire waveguide is composed of diamond.

In the photon source according to the first or second aspect of the present invention the or each colour centre typically comprises an impurity or impurities in the diamond material. For example, the or each impurity may be a nitrogen atom positioned adjacent a vacancy such that a nitrogen-vacancy (N-V) colour centre is formed. The or each impurity may also be a nickel-related colour centre commonly referred to as a "NE8" colour centre. For example, pairs of such colour centres may be arranged for the emission of pairs of entangled photons.

In the first and second aspects of the present invention the waveguide may be provided in any form that is arranged to guide photons. For example, the waveguide may be an optical fibre. Alternatively, the waveguide may be a planar waveguide. In either case the waveguide may comprise a core region that typically is surrounded by a core-surrounding region which has a lower refractive index than the core region.

Alternatively or additionally, the waveguide may comprise a number of light-confining elements, such as tubular portions that may be hollow. The light-confining elements may be arranged about the core region so that light can be guided in the core region. The core region may be solid and the light-confining elements may result in an average refractive index of a core-surrounding region being lower than of the core region.

The light-confining elements may also be arranged so that a photonic crystal waveguide is formed having photonic bandgap in the core-surrounding region. In this case the core region may be hollow or may comprise defects or impurities that locally destroy the photonic bandgap and thereby enable guiding of photons in the core region.

In specific embodiments of the first and second aspect of the present invention the material is positioned in a cavity which is located in the waveguide, typically in or adjacent a core region of the waveguide. The cavity typically is an optical cavity and may be partially hollow or may at least in part be filled with a material that has a different refractive index than the core region. In this case the photon emission of the or each colour centre may be less isotropic and photons may be preferentially emitted into an enhanced cavity mode. Consequently, the optical cavity may improve the efficiency of the photon source.

The present invention provides in a third aspect a method of fabricating a photon source as defined in claim 28.

The material typically is grown in a manner such that the material is bonded to the optical waveguide and in use at least some of the photons emitted from the or each colour centre are guided in the optical waveguide. The material typically is grown so that the material is directly bonded to the waveguide. Alternatively, the material may be grown so that the material is indirectly bonded to the optical waveguide and a layer is positioned between the optical waveguide and the material.

The photon source typically is a source of single photons or may alternatively be a source of pairs of entangled photons such as pairs of entangled photons.

The optical waveguide may be any type of optical waveguide including any type of planar waveguide and optical fibres. For example, the optical waveguide may comprise a core region that is surrounded by a core-surrounding region which has a lower refractive index than the core region.

Alternatively or additionally, the optical waveguide may comprise a number of light-confining elements, such as tubular portions, that are arranged about the core region. The light-confining elements may also be arranged so that a photonic crystal waveguide is formed having photonic bandgap in the core-surrounding region.

The method may comprise the additional step of forming at least one recess in the optical waveguide. For example, the waveguide may be elongated and may have a core and a core surrounding region and at least one recess may be formed at an end-face of the waveguide in the core region. The or each recess typically is etched in the core region using an etch-process that preferentially etches material of the core region.

The material may comprise diamond crystals having the or each colour centre. The step of growing the material typically involves chemical vapour deposition (CVD). The step of growing may also comprise growing the material in the or each recess, for example at an edge associated with the or each recess. The inventors have observed that, dependent on the growth conditions, favourable growth of the material may occur at the or each edge associated with the or each recess. The or each edge typically is at or near the core region and therefore the or each recess has the advantage that the diamond crystals predominantly grow at or near the core region.

If material is grown at an end-face of the waveguide, the method may comprise the step of splicing (fusion or otherwise) the end-face with an end-face of another waveguide. In a specific embodiment the material is grown at an end-face and in the or each recess and the method comprises the step of fusing the end-face with an end-face of another waveguide so that the or each recess is closed and forms a cavity embedding the material having the or each colour centre. In this case the material typically comprises one colour centre.

After the formation of the colour centre, the colour centre may be activated using a suitable excitation source such as suitable laser radiation or electrons. The method may also comprise the step of analysing if only one colour centre is present in the photon source by analysing the photons emitted from the or each colour centre.

The present invention provides in a fourth aspect a method of fabricating a photon source as defined in claim 40.

The material may be embedded in another portion of the optical waveguide.

The optical waveguide may have a core and the material forms a part of the core. The core may also be composed of the material.

The present invention provides in a sixth aspect a quantum key distribution system comprising the photon source according to the first aspect of the present invention.

Because the material is bonded to and/or incorporated in the waveguide and the or each colour centre is coupled to the waveguide, the quantum key distribution system comprising the above-defined photon source may be of improved practicality and efficiency.

The present invention will be more fully understood from the following description of specific embodiments of the invention. The description is provided with reference to the accompanying drawings.

### Brief Description of the Drawings

Figure 1 (a) and (b) shows schematic cross-sectional representations of photon sources according to embodiments of the present invention,
Figure 2 (a) and (b) shows scanning electron micrographs of photon sources according to other embodiments of the present invention,
Figure 3 shows a diagram illustrating the fabrication of a photon source according to a further embodiment of the present invention, and
Figure 4 shows a schematic representation of a photon source during fabrication according to yet another embodiment of the invention.

### Detailed Description of Specific Embodiments

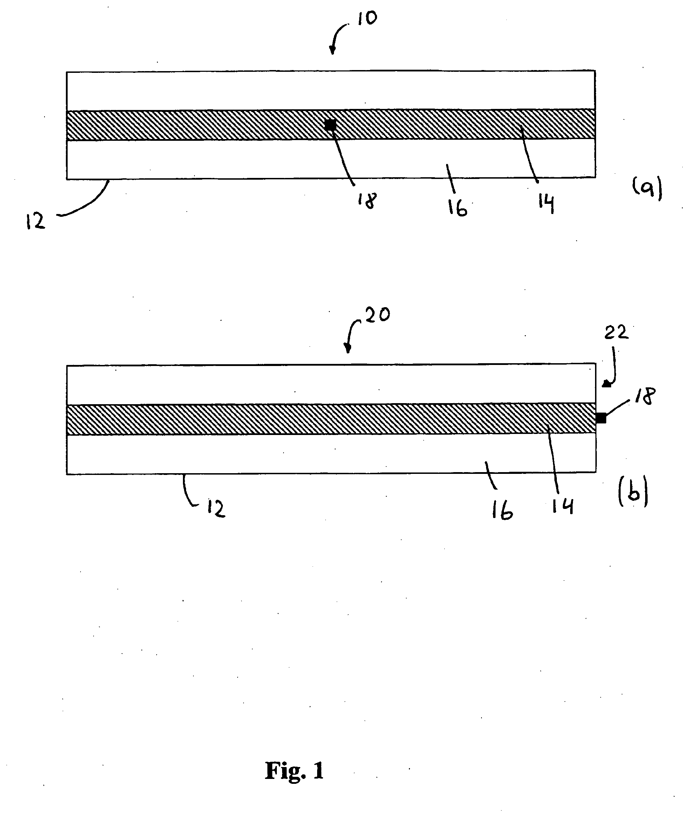

Referring initially to Figure 1 (a), a photon source 10 according to a specific embodiment of the present invention is now described. The photon source 10 comprises an optical waveguide 12 having a core 14 and a cladding 16. In this embodiment the cladding 16 comprises a material that has a refractive index lower than that of the core 14. A diamond crystal 18 is embedded in the core 14. The diamond crystal 18 comprises a colour centre which in use emits single photons. In this embodiment, the colour centre comprises a vacancy in the lattice of the diamond crystal and an adjacent nitrogen atom that replaces another carbon atom so that a nitrogen-vacancy (NV) centre is formed. Laser radiation, for example having a wavelength of 514 nm or 532nm, is used to excite the colour centre and the decay of the excited state results in the emission of a single photon.

It is to be appreciated that alternatively the photon source 10 may comprise any other suitable colour centre. In a variation of this embodiment, the colour centre may also be arranged for the emission of entangled photons. Further, the photon source 10 may comprise more than one colour centre which are arranged for the emission of entangled photons.

In this embodiment, the diamond crystal is embedded in the core 14 of the waveguide 12. Figure 1 (b) shows a variation of this embodiment. The shown photon source 20 comprises a crystal 18 that is grown on end-face 22. In both cases the colour centre is coupled to the waveguide and no further optical components are required to direct the emitted single photons into the waveguide. Further, the close association of the colour centre with the waveguide may result in a larger proportion of the photons being guided in the waveguide and therefore in increased efficiency of the photon source.

In this embodiment the core 14 is composed of germanium doped silica and the cladding 16 is composed of silica. It is to be appreciated that the waveguide 12 may in variations of this embodiment be provided in any suitable form. Both optical fibres and planar waveguides may be used. For example, in an alternative embodiment the waveguide may comprise a number of light-confining elements, such as tubular portions that may be hollow and that may be arranged around a core region. The light-confining elements may also be arranged so that a photonic crystal waveguide is formed having a photonic bandgap in the core-surrounding region.

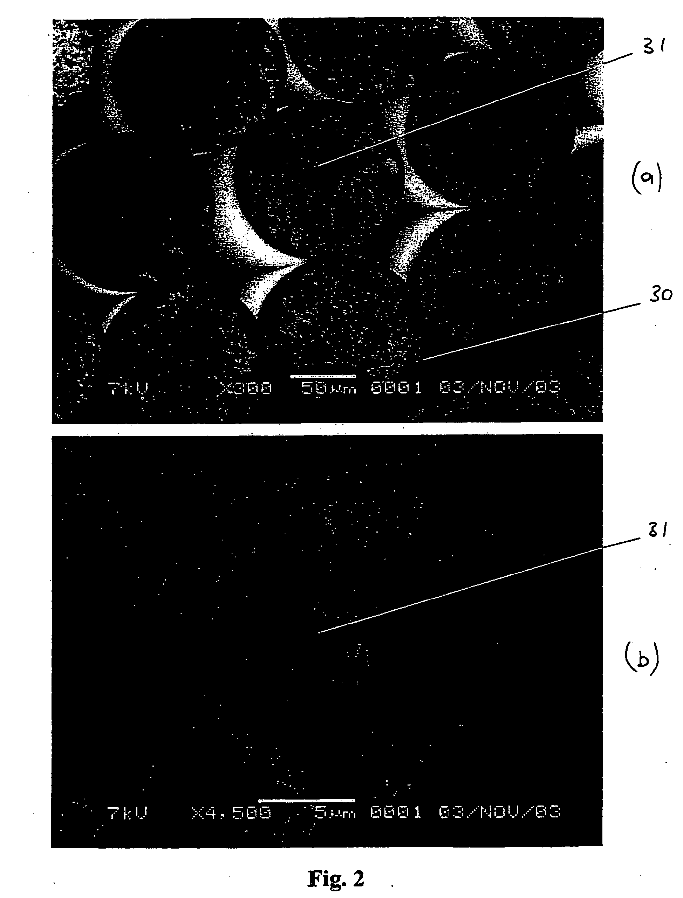

Figure 2(a) shows a scanning electron microscopy micrograph. The micrograph shows end-faces of optical fibres 30 on which diamond crystals 31 with colour centres are grown. Figure 2(b) shows a scanning electron micrograph of the diamond crystals 31 on a fibre end-face with a larger magnification. The concentric rings visible in Figure 2 (b) are due to etching of the doped depressed cladding region that surrounds the core region. The single crystals in the centre Figure 2 (b) are located on the core region.

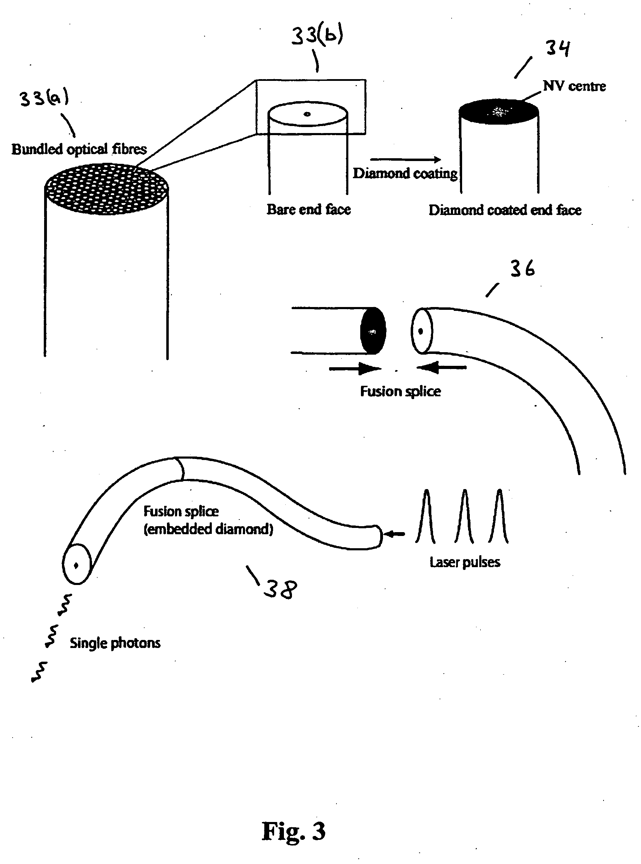

Figure 3 illustrates the fabrication of a photon source according to an embodiment of the present invention. In this fabrication process diamond crystals having the colour centres grown on end-faces of optical waveguides (optical fibres or planar waveguides). The end-faces with diamond crystals are then fused with end-faces of bare waveguides thus embedding respective diamond crystals with respective colour centres in respective fused fibre cores. A 514 or 532 nm pump - laser source is coupled into the fibre and the radiation excites the (N-V) colour centre resulting in emission of a photon having a wavelength in the vicinity of 637 nm from the colour centre.

Excitation may also be achieved by incidence of the pump source on the waveguide at 90 degrees to the direction of propagation, proximate to the colour centre. This has the added advantage of preventing the pump wavelength from travelling down the waveguide. Should the pump wavelength need to be removed from the waveguide, a Bragg grating would be used in the device or external to the device.

It is to be appreciated that in alternative embodiments the colour centres may be excited electrically. For example, electrodes may be applied on two opposing side portions of the waveguide and an alternating electrical voltage may be applied to the electrodes having a frequency chosen so that the colour centres are excited. The photon source may also have an output which has a gate that is electrically controlled.

If the waveguides are optical fibres, initially the optical fibres are stripped and cleaved to form high quality end-faces. Bundles of the cleaved fibres are assembled and secured in a tantalum (or other suitably non-reactive material) tube and may be ultrasonically scratched with a diamond powder containing alcohol suspension. These procedures act to produce diamond nucleation sites or seeds which promote diamond growth (steps 33 (a) and (b)). The fibres (or planar waveguides) are then cleaned and mounted in a sample holder for diamond growth in a chemical vapour deposition (CVD) reactor (the CVD reactor is not shown).

In this embodiment a 1.5 kW microwave CVD reactor (fabricated by AsTex) is used to grow diamond crystallites on the fibre end-faces (step 34).

After the sample is loaded inside the reactor chamber, the chamber is evacuated to a vacuum pressure (for example 10⁻³ Torr, and may be lower if required). The sample is heated using an induction heater. In this embodiment the chamber is filled with hydrogen, methane and nitrogen in ratios of, for example, 99% hydrogen, 0.7% methane and 0.3 % nitrogen. The chamber is brought up to a pressure (for example 30 Torr) and the gases are then flowed through at this constant ratio and pressure. Microwaves are guided into the reactor chamber and excite the gases to form a plasma. Diamond then grows on the substrate located under or slightly in the plasma.

After the growth of diamond crystals on the waveguide end-faces the diamond crystals are embedded by splicing the respective end-faces with the end-faces of bare waveguides to form a virtually seamless strand of optical waveguide with a diamond crystal embedded in the waveguide core (step 36). Waveguide splicing may also be achieved using index matching glues or finger splicing devices.

The formed photon source is operated on a pulsed laser source, such as a pulsed 532 nm laser (step 38, the laser is not shown). On the output of the fibre, the pump frequency is filtered with an attenuation filter or grating. The laser pulses, once propagating along the fibre, require no further alignment with respect to the diamond because of the diamond's location on the fibre core. This incidental spatial filtering ensures the excitation only of the colour centre located in the core. To verify single photon emission anti-bunching experiments may be performed as discussed in A. Beveratos at al, Phys. Rev. Lett. 89, 187901 (2002) and in R.Brouri et al Opt. Lett. 25, 1294 (2000).

As for the embodiment shown in Figure 1 and described above, it is to be appreciated that in an alternative embodiment the photon source may be fabricated so that it is arranged for the emission of entangled photons.

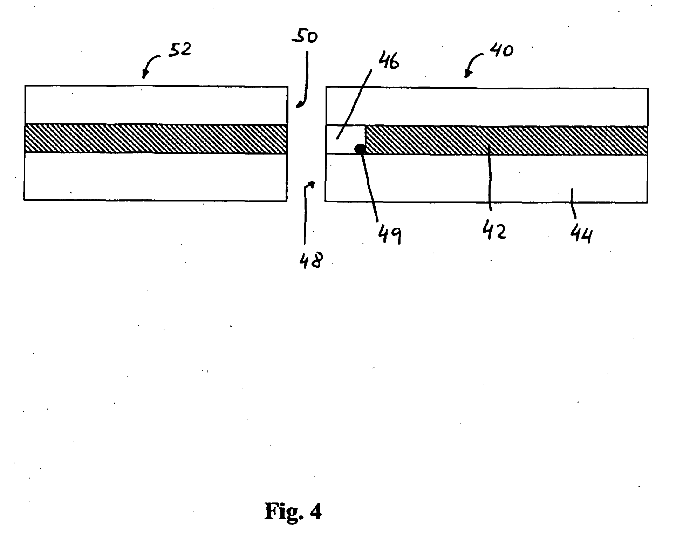

Figure 4 shows a photon source during fabrication according to another embodiment of the invention. Figure 4 shows an optical waveguide 40 (either optical fibre or planar waveguide) having a core 42 and a cladding 44. A recess 46 was etched into the core 42 from end-face 48. For example, the recess may be etched using a wet etching process. In this embodiment, an etching process is used that preferentially etches the core material so as to form the recess 46 in the core 42. In this example, the core 42 is composed of germanium doped silica and the cladding 44 is composed of silica. A 48% hydrofluoric acid solution is used to preferentially etch the core from end-face 48. As the relative etch rates of core and cladding material are known, it is possible to control the depth of the recess 46.

A diamond crystal 49 is then grown within the recess 46. The inventors have observed that nucleation of the diamond material during CVD growth predominantly occurs at edges such as edges of recess 46. Therefore, the recess in the core has the advantage that the diamond crystals predominantly grow at or near the core 46 when end-face 48 is exposed to the chemical vapour of the chemical vapour deposition. The end-face 48 is then fused to end-face 50 of another optical fibre 52 so that the recess forms a closed cavity in which the diamond crystal 49 is positioned. An efficient optical cavity may be formed by adding mirrors to each end of the cavity enclosing the diamond crystal. For example, the mirrors may comprise Bragg gratings at either end of the cavity.

As indicated above, the photon emission from colour centres typically is isotropic. However when the colour centre is embedded in a waveguide, the surrounding medium is not isotropic. Just as propagation of an optical signal along the core of an optical fibre is favoured over propagation transverse to the fibre, so too is propagation of photons emitted from the colour centre. This means that the spontaneous emission will be stronger in the direction of the waveguide (this enhancement is due to the Purcell effect). In this embodiment, the spontaneous photon emission in the direction of the core is further enhanced because the colour centre is positioned in the optical cavity formed by recess 46 and mirrors. In this embodiment, the optical cavity is elongated and mainly hollow and therefore increases the effective intensity of "empty space" along the core and hence increase the spontaneous emission in a direction along the core. Such cavity enhancement is particularly advantageous for transform limited pulses or coherent photon pulses.

In one specific embodiment of the present invention any the photon source as described above forms a part of a a quantum key distribution system For general details about the operation of a quantum key distribution systems reference is made to A. Beveratos at al, Phys. Rev. Lett. 89, 187901 (2002).

Although the invention has been described with reference to particular examples, it will be appreciated by those skilled in the art that the invention may be embodied in many other forms. For example, the colour centres may not comprise nitrogen-vacancies but may for example comprise nickel and nitrogen atoms. For other examples of colour centres reference is made to "Optical Properties of Diamond", A Data Handbook, Zaitsev, A.M. 2001, XVII, ISBN: 3-540-66582-X Springer

Further, the material having the colour centre may not necessarily be diamond and may not be deposited on a portion of a waveguide. If diamond crystals are present, the crystals may be provided in form nano, micro, single, or poly crystals. For example, the material may be deposited on a layer that is formed on the waveguide or may be formed elsewhere and mechanically coupled to the waveguide and embedded within the waveguide. Alternatively, the waveguide may also comprise a core that is formed from the material, such as diamond, and in which the or each colour centre is formed. Further, the entire waveguide may be formed from diamond.

In addition it is to be appreciated that the material having the or each colour centre may also be mechanically be embedded in the waveguide. For example, a hole may be etched into the waveguide and the material may be inserted into the hole which may then be closed.

It is also to be appreciated that the photon source may be used for any application which requires such a photon source. This includes quantum key distribution but also includes applications in other fields of optics including quantum optics and applications in the area of research.

Further, it is to be appreciated that the reference that is being made to prior art publications does not constitute an admission that the publication forms a part of the common general knowledge in the art, in Australia or any other country.

## Claims

1. A photon source (20) comprising:
an optical waveguide (12, 40) and
a material (18, 49) comprising at least one colour centre, the or each colour centre being arranged for emission of single or entangled photons,
the material (18, 49) having been grown so that the material (18, 49) is bonded to the optical waveguide (12, 40) and in use at least some of the photons emitted by the or each colour centre are guided in the optical waveguide (12, 40).

2. A photon source (10) comprising:
an optical waveguide (12) incorporating a material (18) having at least one colour centre arranged for emission of single or entangled photons,
the material (18) being incorporated so that in use at least some of the photons emitted from the or each colour centre are guided in the optical waveguide (12).

3. The photon source as claimed in claim 1 or 2 being a source of single photons.

4. The photon source as claimed in claim 1 or 2 being arranged for emission of entangled photons.

5. The photon source as claimed in claim 4 comprising at least two colour centres which are arranged to emit together at least two entangled photons.

6. The photon source as claimed in claim 4 comprising at least one colour centre which itself is arranged to emit entangled photons.

7. The photon source as claimed in any one of the preceding claims wherein the material (18, 49) has a diamond structure.

8. The photon source as claimed in any one of the preceding claims wherein the material (18, 49) is a diamond material.

9. The photon source as claimed in any one of the preceding claims wherein the material (18, 49) is grown on a portion of a core (14, 42) region of the waveguide (12, 40).

10. The photon source as claimed in any one of the preceding claims wherein the material (18, 49) is a diamond crystal (18, 49) and the or each colour centre comprises a nitrogen-related colour centre.

11. The photon source as claimed in any one of claims 1 to 9 wherein the material (18, 49) is a diamond crystal (18, 49) and the or each colour centre comprises a nickel-related colour centre.

12. The photon source as claimed in any one of the preceding claims wherein the waveguide (12, 40) is an optical fibre (30).

13. The photon source as claimed in any one of claims 1 to 11 wherein the waveguide (12, 40) is a planar waveguide.

14. The photon source as claimed in claim 12 or 13 comprising a core (14, 42) region that is surrounded by a core-surrounding region (16, 44) which has a lower refractive index than the core region (14, 42).

15. The photon source as claimed in claim 12 or 13 comprising a number of light-confining elements arranged about the core region (14, 42) so that light can be guided in the core region (14, 42).

16. The photon source as claimed in claim 15 wherein the core region (14, 42) is solid and the light-confining elements result in an average refractive index of a core-surrounding region (16, 44) being lower than that of the core region (14, 42).

17. The photon source as claimed in claim 15 wherein the light-confining elements are arranged so that a photonic crystal waveguide (12, 40) is formed having photonic bandgap in the core-surrounding region (16, 44).

18. The photon source as claimed in any one of the preceding claims wherein the material (18, 49) is positioned in a cavity (46) which is located in the waveguide (40).

19. The photon source as claimed in claim 18 wherein the cavity (46) is located in a core region (42) of the waveguide (42).

20. The photon source as claimed in 18 or 19 wherein the cavity (46) is an optical cavity.

21. The photon source as claimed in claim 2 or in any one of claims 3 to 20 when dependent on claim 2 wherein the material (18) is embedded in the optical waveguide (12).

22. The photon source as claimed in claim 2 or in any one of claims 3 to 20 when dependent on claim 2 wherein the material (18) forms a part of the waveguide (12).

23. The photon source as claimed in claim 2 or in any one of claims 3 to 22 when dependent on claim 2 wherein the waveguide (12, 40) has a diamond core that comprises the or each colour centre.

24. The photon source as claimed in claim 2 or in any one of claims 3 to 23 when dependent on claim 2 wherein at least a portion of the length of the waveguide (12, 40) is composed of diamond.

25. The photon source as claimed in claim 24 wherein the entire waveguide (12, 40) is composed of diamond.

26. The photon source as claimed in any one of the preceding claims being arranged for optical excitation of the or each colour centre.

27. The photon source as claimed in any one of the preceding claims being arranged for electrical excitation of the or each colour centre.

28. A method of fabricating a photon source (10, 20) comprising:
providing an optical waveguide (12, 40), and
growing a material (18, 49) adjacent or in association with the optical waveguide (12, 40) in a manner so that at least one colour centre for emission of single or entangled photons is formed in the material (18, 49) and in use at least some of the photons emitted by the or each colour centre are guided in the optical waveguide (12, 40).

29. The method as claimed in claim 28 wherein the material (18, 49) is grown in a manner such that the material (18, 49) is bonded to the optical waveguide (12, 40) and in use at least some of the single photons emitted from the or each colour centre are guided in the optical waveguide (12, 40).

30. The method as claimed in claim 28 or 29 wherein the material (18, 49) is grown directly on a portion of the waveguide (12, 40) so that a direct bonding of the optical waveguide (12, 40) with the material (18, 49) is effected.

31. The method as claimed in any one of claims 28 to 30 comprising the additional step of forming at least one recess (46) in the optical waveguide (40).

32. The method as claimed in claim 31 wherein the waveguide (40) comprises a core (42) and a core surrounding region (44) and the at least one recess (46) is formed at an end-face (48) of the waveguide (40) in the core region (42).

33. The method as claimed in claim 31 or 32 wherein the recess (46) is formed by etching the recess (46) in the core region (42) using an etch-process that preferentially etches material of the core region (42).

34. The method as claimed in any one of claims 28 to 33 wherein the material (18, 49) comprises diamond crystals having the or each colour centre.

35. The method as claimed in any one of claims 28 to 34 wherein the step of growing the material (18, 49) involves chemical vapour deposition (CVD).

36. The method as claimed in claim 31 or any one of claims 32 to 35 when dependent on claim 31 wherein the step of growing a material comprises growing the material (18, 49) at an edge associated with the or each recess (46).

37. The method as claimed claim 31 or any one of claims 32 to 35 when dependent on claim 31 wherein the step of growing a material (18, 49) comprises growing the material (18, 49) in the or each recess (46).

38. The method as claimed in claim 37 wherein the material (49) is grown at an end-face (48) of the waveguide ( 40) and the method comprises the step of splicing the end-face with an end-face of another waveguide.

39. The method as claimed in claim 37 wherein the material (49) is grown at an end-face (48) and in the or each recess (46) and the method comprises the step of splicing the end-face with an end-face of another waveguide so that the or each recess (46) is closed and forms a cavity comprising that material (49) having the or each colour centre.

40. A method of fabricating a photon source (10) comprising an optical waveguide (12), the method comprising the steps of:
fabricating an optical waveguide (12) incorporating a material (18) in which at least one colour centre for emission of single or entangled photons can be formed and
forming the or each colour centre in the material (18) in a manner so that in use at least some of the emitted photons are guided in the optical waveguide (12).

41. The method as claimed in claim 40 wherein the optical waveguide (12) has a core (14) and the material (18) forms a part of the core (14).

42. The method as claimed in claim 40 wherein the optical waveguide (12) has a core (14) which is composed of the material (18).

43. A quantum key distribution system comprising the photon source (10, 20) as claimed in any one of claims 1 to 27.

## Patentansprüche

1. Photonenquelle (20), umfassend:
einen optischen Wellenleiter (12, 40), und
ein Material (18, 49), das zumindest ein Farbzentrum umfasst, wobei das oder jedes Farbzentrum zur Emission einzelner oder verschränkter Photonen angeordnet ist,
wobei das Material (18, 49) so aufgewachsen worden ist, dass das Material (18, 49) mit dem optischen Wellenleiter (12, 40) verbunden ist, und im Gebrauch zumindest ein Teil der Photonen, die durch das oder jedes Farbzentrum emittiert werden, in dem optischen Wellenleiter (12, 40) geführt ist.

2. Photonenquelle (10), umfassend:
einen optischen Wellenleiter (12), der ein Material (18) mit zumindest einem Farbzentrum einschließt, das zur Emission einzelner oder verschränkter Photonen angeordnet ist,
wobei das Material (18) so eingeschlossen ist, dass im Gebrauch zumindest ein Teil der Photonen, die von dem oder jedem Farbzentrum emittiert werden, in dem optischen Wellenleiter (12) geführt ist.

3. Photonenquelle nach einem der Ansprüche 1 oder 2,
die eine Quelle für einzelne Photonen ist.

4. Photonenquelle nach einem der Ansprüche 1 oder 2,
die zur Emission verschränkter Photonen angeordnet ist.

5. Photonenquelle nach Anspruch 4,
mit zumindest zwei Farbzentren, die derart angeordnet sind, dass sie gemeinsam zumindest zwei verschränkte Photonen emittieren.

6. Photonenquelle nach Anspruch 4,
mit zumindest einem Farbzentrum, das selbst derart angeordnet ist, dass es verschränkte Photonen emittiert.

7. Photonenquelle nach einem der vorhergehenden Ansprüche,
wobei das Material (18, 49) eine Diamantstruktur besitzt.

8. Photonenquelle nach einem der vorhergehenden Ansprüche,
wobei das Material (18, 49) ein Diamantmaterial ist.

9. Photonenquelle nach einem der vorhergehenden Ansprüche,
wobei das Material (18, 49) auf einem Abschnitt eines Gebietes eines Kernes (14, 42) des Wellenleiters (12, 40) aufgewachsen ist.

10. Photonenquelle nach einem der vorhergehenden Ansprüche,
wobei das Material (18, 49) ein Diamantkristall (18, 49) ist und das oder jedes Farbzentrum ein stickstoffbezogenes Farbzentrum umfasst.

11. Photonenquelle nach einem der Ansprüche 1 bis 9,
wobei das Material (18, 49) ein Diamantkristall (18, 49) ist und das oder jedes Farbzentrum ein nickelbezogenes Farbzentrum umfasst.

12. Photonenquelle nach einem der vorhergehenden Ansprüche,
wobei der Wellenleiter (12, 40) eine optische Faser (30) ist.

13. Photonenquelle nach einem der Ansprüche 1 bis 11,
wobei der Wellenleiter (12, 40) ein planarer Wellenleiter ist.

14. Photonenquelle nach einem der Ansprüche 12 oder 13,
mit einem Gebiet eines Kernes (14, 42), das durch ein Kernumgebungsgebiet (16, 44) umgeben ist, das einen geringeren Brechungsindex als das Kerngebiet (14, 42) besitzt.

15. Photonenquelle nach einem der Ansprüche 12 oder 13,
mit einer Anzahl von lichtbeschränkenden Elementen, die um das Kerngebiet (14, 42) angeordnet sind, so dass Licht in dem Kerngebiet (14, 42) geführt werden kann.

16. Photonenquelle nach Anspruch 15,
wobei das Kerngebiet (14, 42) ein Feststoff ist und die lichtbeschränkenden Elemente in einem durchschnittlichen Brechungsindex eines Kernumgebungsgebietes (16, 44) resultieren, der geringer als derjenige des Kerngebietes (14, 42) ist.

17. Photonenquelle nach Anspruch 15,
wobei die lichtbeschränkenden Elemente derart angeordnet sind, dass ein photonischer Kristallwellenleiter (12, 40) mit einer photonischen Bandlücke in dem Kernumgebungsgebiet (16, 44) gebildet ist.

18. Photonenquelle nach einem der vorhergehenden Ansprüche,
wobei das Material (18, 49) in einem Hohlraum (46) positioniert ist, der in dem Wellenleiter (40) angeordnet ist.

19. Photonenquelle nach Anspruch 18,
wobei der Hohlraum (46) in einem Kerngebiet (42) des Wellenleiters (42) angeordnet ist.

20. Photonenquelle nach einem der Ansprüche 18 oder 19,
wobei der Hohlraum (46) ein optischer Hohlraum ist.

21. Photonenquelle nach Anspruch 2 oder einem der Ansprüche 3 bis 20, wenn von Anspruch 2 abhängig,
wobei das Material (18) in dem optischen Wellenleiter (12) eingebettet ist.

22. Photonenquelle nach Anspruch 2 oder einem der Ansprüche 3 bis 20, wenn von Anspruch 2 abhängig,
wobei das Material (18) einen Teil des Wellenleiters (12) bildet.

23. Photonenquelle nach Anspruch 2 oder einem der Ansprüche 3 bis 22, wenn von Anspruch 2 abhängig,
wobei der Wellenleiter (12, 40) einen Diamantkern besitzt, der das oder jedes Farbzentrum umfasst.

24. Photonenquelle nach Anspruch 2 oder einem der Ansprüche 3 bis 23, wenn von Anspruch 2 abhängig,
wobei zumindest ein Abschnitt der Länge des Wellenleiters (12, 40) aus Diamant besteht.

25. Photonenquelle nach Anspruch 24,
wobei der gesamte Wellenleiter (12, 40) aus Diamant besteht.

26. Photonenquelle nach einem der vorhergehenden Ansprüche,
die für eine optische Erregung des oder jedes Farbzentrums angeordnet ist.

27. Photonenquelle nach einem der vorhergehenden Ansprüche,
die für eine elektrische Erregung des oder jedes Farbzentrums angeordnet ist.

28. Verfahren zum Herstellen einer Photonenquelle (10, 20), umfassend, dass:
ein optischer Wellenleiter (12, 40) bereitgestellt wird, und
ein Material (18, 49) benachbart zu oder in Verbindung mit dem optischen Wellenleiter (12, 40) auf eine Art und Weise aufgewachsen wird, so dass zumindest ein Farbzentrum zur Emission einzelner oder verschränkter Photonen in dem Material (18, 49) geformt wird, und im Gebrauch zumindest ein Teil der Photonen, die durch das oder jedes Farbzentrum emittiert werden, in dem optischen Wellenleiter (12, 40) geführt wird.

29. Verfahren nach Anspruch 28,
wobei das Material (18, 49) auf eine Art und Weise aufgewachsen wird, so dass das Material (18, 49) mit dem optischen Wellenleiter (12, 40) verbunden wird, und im Gebrauch zumindest ein Teil der einzelnen Photonen, die von dem oder jedem Farbzentrum emittiert werden, in dem optischen Wellenleiter (12, 40) geführt wird.

30. Verfahren nach einem der Ansprüche 28 oder 29,
wobei das Material (18, 49) direkt auf einem Abschnitt des Wellenleiters (12, 40) aufgewachsen wird, so dass ein direktes Verbinden des optischen Wellenleiters (12, 40) mit dem Material (18, 49) bewirkt wird.

31. Verfahren nach einem der Ansprüche 28 bis 30,
mit dem zusätzlichen Schritt, dass zumindest eine Ausnehmung (46) in dem optischen Wellenleiter (40) gebildet wird.

32. Verfahren nach Anspruch 31,
wobei der Wellenleiter (40) einen Kern (42) und ein Kernumgebungsgebiet (44) umfasst und die zumindest eine Ausnehmung (46) an einer Stirnseite (48) des Wellenleiters (40) in dem Kerngebiet (42) geformt wird.

33. Verfahren nach einem der Ansprüche 31 oder 32,
wobei die Ausnehmung (46) durch Ätzen der Ausnehmung (46) in dem Kerngebiet (42) unter Verwendung eines Ätzprozesses geformt wird, der bevorzugt Material des Kerngebietes (42) ätzt.

34. Verfahren nach einem der Ansprüche 28 bis 33,
wobei das Material (18, 49) Diamantkristalle umfasst, die das oder jedes Farbzentrum aufweisen.

35. Verfahren nach einem der Ansprüche 28 bis 34,
wobei der Schritt zum Aufwachsen des Materials (18, 49) eine chemische Abscheidung aus der Dampfphase (CVD) betrifft.

36. Verfahren nach Anspruch 31 oder einem der Ansprüche 32 bis 35, wenn von Anspruch 31 abhängig,
wobei der Schritt zum Aufwachsen eines Materials umfasst, dass das Material (18, 49) an einem Rand, der der oder jeder Ausnehmung (46) zugeordnet ist, aufgewachsen wird.

37. Verfahren nach Anspruch 31 oder einem der Ansprüche 32 bis 35, wenn von Anspruch 31 abhängig,
wobei der Schritt zum Aufwachsen eines Materials (18, 49) umfasst, dass das Material (18, 49) in der oder jeder Ausnehmung (46) aufgewachsen wird.

38. Verfahren nach Anspruch 37,
wobei das Material (49) an einer Stirnseite (48) des Wellenleiters (40) aufgewachsen wird und das Verfahren den Schritt umfasst, dass die Stirnseite mit einer Stirnseite eines anderen Wellenleiters zusammengefügt wird.

39. Verfahren nach Anspruch 37,
wobei das Material (49) an einer Stirnseite (48) und in der oder jeder Ausnehmung (46) aufgewachsen wird, und das Verfahren den Schritt umfasst, dass die Stirnseite mit einer Stirnseite eines anderen Wellenleiters zusammengefügt wird, so dass die oder jede Ausnehmung (46) geschlossen wird und einen Hohlraum bildet, der dieses Material (49), das das oder jedes Farbzentrum aufweist, umfasst.

40. Verfahren zum Herstellen einer Photonenquelle (10), die einen optischen Wellenleiter (12) umfasst, wobei das Verfahren die Schritte umfasst, dass:
ein optischer Wellenleiter (12) hergestellt wird, der ein Material (18) einschließt, in dem zumindest ein Farbzentrum zur Emission einzelner oder verschränkter Photonen gebildet werden kann, und
das oder jedes Farbzentrum in dem Material (18) auf eine Art und Weise geformt wird, so dass im Gebrauch zumindest ein Teil der emittierten Photonen in dem optischen Wellenleiter (12) geführt wird.

41. Verfahren nach Anspruch 40,
wobei der optische Wellenleiter (12) einen Kern (14) besitzt und das Material (18) einen Teil des Kerns (14) bildet.

42. Verfahren nach Anspruch 40,
wobei der optische Wellenleiter (12) einen Kern (14) besitzt, der aus dem Material (18) besteht.

43. Quanten-Schlüsselaustauschsystem, mit der Photonenquelle (10, 20) nach einem der Ansprüche 1 bis 27.

## Revendications

1. Source de photons (20) comprenant :
un guide d'ondes optique (12, 40) et
un matériau (18, 49) comprenant au moins un centre de couleur, le ou chaque centre de couleur étant agencé pour émettre des photons uniques ou des photons entremêlés,
le matériau (18, 49) ayant été amené à croître de telle façon que le matériau (18, 49) est intimement lié au guide d'ondes optique (12, 40) et qu'en utilisation, au moins certains des photons émis par le ou chaque centre de couleur sont guidés dans le guide d'ondes optique (12,40).

2. Source de photons (10) comprenant :
un guide d'onde optique (12) qui incorpore un matériau (18) ayant au moins un centre de couleur agencé pour émettre des photons uniques ou des photons entremêlés,
le matériau (18) étant incorporé de telle façon que, en utilisation, au moins certains des photons émis depuis le ou chaque centre de couleur sont guidés dans le guide d'ondes optique (12).

3. Source de photons selon la revendication 1 ou 2, qui est une source de photons uniques.

4. Source de photons selon la revendication 1 ou 2, agencée pour l'émission de photons entremêlés.

5. Source de photons selon la revendication 4, comprenant au moins deux centres de couleurs qui sont agencés pour émettre ensemble au moins deux photons entremêlés.

6. Source de photons selon la revendication 4, comprenant au moins un centre de couleur qui est agencé lui-même pour émettre des photons entremêlés.

7. Source de photons selon l'une quelconque des revendications précédentes, dans laquelle le matériau (18, 49) a une structure de type diamant.

8. Source de photons selon l'une quelconque des revendications précédentes, dans laquelle le matériau (18, 49) est un matériau à base de diamant.

9. Source de photons selon l'une quelconque des revendications précédentes, dans laquelle le matériau (18, 49) est amené à croître sur une portion d'une région de cour (14, 42) du guide d'ondes (12, 40).

10. Source de photons selon l'une quelconque des revendications précédentes, dans laquelle le matériau (18, 49) est un cristal de diamant (18, 49), et le ou chaque centre de couleur comprend un centre de couleur en relation avec de l'azote.

11. Source de photons selon l'une quelconque des revendications 1 à 9, dans laquelle le matériau (18, 49) est un cristal de diamant (18, 49) et le ou chaque centre de couleur comprend un centre de couleur en relation avec du nickel.

12. Source de photons selon l'une quelconque des revendications précédentes, dans laquelle le guide d'ondes (12, 40) est une fibre optique (30).

13. Source de photons selon l'une quelconque des revendications 1 à 11, dans laquelle le guide d'ondes (12, 40) est un guide d'ondes plan.

14. Source de photons selon la revendication 12 ou 13, comprenant une région de coeur (14, 42) qui est entourée par une région d'entourage (16, 44) qui présente un indice de réfraction inférieur à celui de la région de coeur (14, 42).

15. Source de photons selon la revendication 12 ou 13, comprenant un certain nombre d'éléments de confinement de lumière agencés autour de la région de coeur (14, 42) de sorte que la lumière peut être guidée dans la région de coeur (14, 42).

16. Source de photons selon la revendication 15, dans laquelle la région de coeur (14, 42) est pleine et les éléments de confinement de lumière résultent du fait que l'indice de réfraction moyen d'une région d'entourage du coeur (16, 44) est inférieure à celui de la région de coeur (14, 42).

17. Source de photons selon la revendication 15, dans laquelle les éléments de confinement de lumière sont agencés de telle façon qu'un guide d'ondes à cristal photonique (12, 40) est formé, qui présente un saut de bande photonique dans la région d'entourage de coeur (16, 44).

18. Source de photons selon l'une quelconque des revendications précédentes, dans laquelle le matériau (18, 49) est positionné dans une cavité (46) qui est située dans le guide d'ondes (40).

19. Source de photons selon la revendication 18, dans laquelle la cavité (46) est située dans une région de coeur (42) du guide d'ondes (40).

20. Source de photons selon la revendication 18 ou 19, dans laquelle la cavité (46) est une cavité optique.

21. Source de photons selon la revendication 2 ou selon l'une quelconque des revendications 3 à 20 prise en dépendance de la revendication 2, dans laquelle le matériau (18) est noyé dans le guide d'ondes optique (12).

22. Source de photons selon la revendication 2 ou selon l'une quelconque des revendications 3 à 20 prise en dépendance de la revendication 2, dans laquelle le matériau (18) fait partie du guide d'ondes (12).

23. Source de photons selon la revendication 2 ou selon l'une quelconque des revendications 3 à 22 prise en dépendance de la revendication 2, dans laquelle le guide d'ondes (12, 40) possède un coeur en diamant qui comprend le ou chaque centre de couleur.

24. Source de photons selon la revendication 2 ou selon l'une quelconque des revendications 3 à 23 prise en dépendance de la revendication 2, dans laquelle au moins une portion de la longueur du guide d'ondes (12, 40) est composée de diamant.

25. Source de photons selon la revendication 24, dans laquelle le guide d'ondes entier (12, 40) est composé de diamant.

26. Source de photons selon l'une quelconque des revendications précédentes, qui est agencée pour l'excitation optique du ou de chaque centre de couleur.

27. Source de photons selon l'une quelconque des revendications précédentes, qui est agencée pour l'excitation électrique du ou de chaque centre de couleur.

28. Procédé de fabrication d'une source de photons (10, 20) comprenant les opérations consistant à :
fournir un guide d'ondes optique (12, 40), et
faire croître un matériau (18, 49) adjacent ou en association avec le guide d'ondes optique (12, 40) d'une manière telle qu'au moins un centre de couleur pour l'émission de photons uniques ou de photons entremêlés est formé dans le matériau (18, 49) et, qu'en utilisation, au moins certains des photons émis par le ou chaque centre de couleur sont guidés dans le guide d'ondes optique (12, 40).

29. Procédé selon la revendication 28, dans lequel le matériau (18, 49) est amené à croître d'une manière telle que le matériau (18, 49) est intimement lié au guide d'ondes optique (12, 40) et qu'en utilisation au moins certains des photons uniques émis par le ou chaque centre de couleur sont guidés dans le guide d'ondes optique (12, 40).

30. Procédé selon la revendication 28 ou 29, dans lequel le matériau (18, 49) est amené à croître directement sur une portion du guide d'ondes (12, 40) de sorte que l'on effectue une liaison intime directe du guide d'ondes optique (12, 40) avec le matériau (18, 49).

31. Procédé selon l'une quelconque des revendications 28 à 30, comprenant l'étape additionnelle consistant à former au moins un évidement (46) dans le guide d'ondes optique (40).

32. Procédé selon la revendication 31, dans lequel le guide d'ondes (40) comprend une région de coeur (42) et une région d'entourage de coeur (44) et ledit au moins un évidement (46) est formé au niveau d'une face terminale (48) du guide d'ondes (40) dans la région de coeur (42).

33. Procédé selon la revendication 31 août 32, dans lequel l'évidement (46) est formé par attaque chimique de l'évidement (46) dans la région de coeur (42) en utilisant un processus d'attaque qui attaque de façon préférentielle le matériau de la région de coeur (42).

34. Procédé selon l'une quelconque des revendications 28 à 33, dans lequel le matériau (18, 49) comprend des cristaux de diamant possédant le ou chaque centre de couleur.

35. Procédé selon l'une quelconque des revendications 28 à 34, dans lequel l'étape consistant à faire croître le matériau (18, 49) implique une déposition chimique en phase vapeur (CVD).

36. Procédé selon la revendication 31 ou l'une quelconque des revendications 32 à 35 prise en dépendance de la revendication 31, dans lequel l'étape consistant à faire croître un matériau comprend de faire croître le matériau (18, 49) au niveau d'une bordure associée à l'évidement ou à chaque évidement (46).

37. Procédé selon la revendication 31 ou l'une quelconque des revendications 32 à 35 prise en dépendance de la revendication 31, dans lequel l'étape consistant à faire croître un matériau (18, 49) comprend de faire croître le matériau (18, 49) dans l'évidement ou dans chaque évidement (46)

38. Procédé selon la revendication 37, dans lequel le matériau (49) est amené à croître au niveau d'une face terminale (48) du guide d'ondes (40) et le procédé comprend l'étape consistant à épissurer la face terminale avec une face terminale d'un autre guide d'ondes.

39. Procédé selon la revendication 37, dans lequel le matériau (49) est amené à croître au niveau d'une face terminale (48) et dans le ou dans chaque évidement (46), et le procédé comprend l'étape consistant à épissurer la face terminale avec une face terminale d'un autre guide d'ondes, de sorte que le ou chaque évidement (46) est fermé et forme une cavité comprenant ledit matériau (49) ayant le ou chaque centre de couleur.

40. Procédé de fabrication d'une source de photons (10) comprenant un guide d'ondes optique (12), le procédé comprenant les étapes consistant à :
fabriquer un guide d'ondes optique (12) qui incorpore un matériau (18) dans lequel on peut former au moins un centre de couleur pour l'émission de photons uniques ou de photons entremêlés, et
former le ou chaque centre de couleur dans le matériau (18) d'une manière telle que, en utilisation, au moins certains des photons émis sont guidés dans le guide d'ondes optique (12).

41. Procédé selon la revendication 40, dans lequel le guide d'ondes optique (12) comprend un coeur (14) et le matériau (18) forme une partie du coeur (14).

42. Procédé selon la revendication 40, dans lequel le guide d'ondes optique (12) comprend un coeur (14) qui est composé du matériau (18).

43. Système de distribution de clé quantique, comprenant la source de photons (10, 20) telle que revendiquée selon l'une quelconque des revendications 1 à 27.
